# EUROPÄISCHE PATENTSCHRIFT

(11) **EP 2 738 040 B1**
(45) Veröffentlichungstag und Bekanntmachung des Hinweises auf die Patenterteilung: **06.04.2016**
(21) Anmeldenummer: 12194811.1
(22) Anmeldetag: 29.11.2012
(51) Int. Cl.: B60P 3/41, B62D 33/02

(54) **Rungenvorrichtung**
Stanchion device
Dispositif de ranches

(43) Veröffentlichungstag der Anmeldung: 04.06.2014
(73) Patentinhaber: RESSENIG-Fahrzeugbau Gesellschaft m.b.H., 9500 Villach (AT)
(72) Erfinder: Ressenig, Josef, 9500 Villach (AT)
(74) Vertreter: Wirnsberger, Gernot

(56) Entgegenhaltungen:
- EP-A2- 2 028 084
- WO-A1-98/39174
- CA-A1- 2 504 325
- DE-A1- 10 351 552
- DE-B- 1 133 992
- US-A- 3 204 983
- US-A- 4 268 051

## Beschreibung

Die Erfindung betrifft eine Rungenvorrichtung für ein Transportfahrzeug, insbesondere zum Transportieren von Rundholz sowie Schnittholz, umfassend einen Rungenschemel und Rungen, die mit dem Rungenschemel verbunden sind, wobei die Rungenvorrichtung mehrere Arbeitszustände aufweist, wobei ein Element mit einem kopfseitigen Profil mit vorspringenden und rückspringenden Bereichen vorgesehen ist, wobei das Profil in einem ersten Arbeitszustand und eine weitere Oberfläche in einem zweiten Arbeitszustand eine oberste Oberfläche in Höhe des Rungenschemels zumindest mitdefiniert.

Bei Transportfahrzeugen zum Transport von Langhölzern werden in der Regel auf der Ladefläche Rungenvorrichtungen eingesetzt, die einen Rungenschemel und daran seitlich angelenkte Rungen aufweisen. Die üblicherweise an den Enden des Rungenschemels drehbar befestigten Rungen können senkrecht zum Rungenschemel aufragend fixiert werden, sodass das Langholz beim Transport zwischen den Rungen gehalten werden kann.

Das Dokument DE 103 51 552 A1 offenbart ein Fahrzeug für den Transport von Kurzholz und Langholz, wobei eine in einer Fahrtrichtung verstellbare Klemmbank vorgesehen ist, welche verschwenkbare Klemmarme aufweist.

Aus dem Dokument US 3,204,983 A ist eine Vorrichtung zur Fixierung von Baumstämmen bekannt geworden, welche verschwenkbare Arme aufweist.

Für den Transport von Langholz in der Form von Holzstämmen bzw. Blochen ist auf der einen Seite bereits angedacht worden, im Bereich eines Rungenschemels eine profilierte Oberfläche mit Zacken oder dergleichen vorzusehen, um Rundholz besser gegen ein Verrutschen zu sichern. Wenngleich sich dies in der Praxis bewährt hat, ist allerdings nachteilig, dass bei einem entsprechenden Aufbau ein Transport von Schnittholz nicht mehr ohne Weiteres möglich ist. Schnittholz ist nämlich im Unterschied zu Rundholz wie Holzstämmen bereits in einem zumindest annähernd gebrauchsfertigen Zustand, weshalb die Oberfläche des Schnittholzes nicht mehr verletzt werden darf, was aber bei einer Lagerung und einem Transport auf gezackten Oberflächen nicht mehr sichergestellt ist.

Auf der anderen Seite sollte ein zum Holztransport mit einer Rungenvorrichtung entsprechend adaptiertes Transportfahrzeug in einem Betrieb nach Möglichkeit nicht nur zum Transport von Rundholz, sondern auch für Schnittholz einsetzbar sein.

Aufgabe der Erfindung ist es, eine hierfür geeignete Rungenvorrichtung anzugeben.

Diese Aufgabe wird gelöst, wenn bei einer Rungenvorrichtung der eingangs genannten Art das Element mit dem kopfseitigen Profil entlang einer Längserstreckung des Rungenschemels verläuft und die Rungen an jeweils einer Seite des Elementes angeordnet sind.

Bei der Erfindung ist von Vorteil, dass sowohl Rundholz als auch Schnittholz nicht nur für einen Transport sicher befestigbar ist, sondern insbesondere Schnittholz dabei nicht verletzt wird.

In einem ersten Arbeitszustand sind die Rungen üblicherweise ausgeklappt, stehen also senkrecht zum Rungenschemel, wobei der Rungenschemel waagrecht liegt. Ein kopfseitiges Profil mit vorspringenden Bereichen bildet dabei eine oberste Oberfläche, sodass Rundholz bei der Ablage auf der Rungenvorrichtung auf den vorspringenden Bereichen des Profils zu liegen kommt und mit diesem quasi etwas verzahnt und damit gegen ein Verrutschen gesichert ist. Das kopfseitige Profil des Elementes bildet in diesem ersten Arbeitszustand die oberste Oberfläche, auf welcher Rundholz abgesetzt und zwischen den Rungen gehalten werden kann. Es kann zwar vorkommen, dass dabei die vorspringenden Bereiche geringfügig in die Oberfläche des Rundholzes eingreifen. Dies ist jedoch unbeachtlich, weil das Rundholz ohnedies weiterverarbeitet wird und es auf die Bereiche jener Oberfläche, die mit dem Profil in Eingriff stehen, nicht ankommt.

In einem zweiten Arbeitszustand definiert eine weitere Oberfläche eine oberste Oberfläche in Höhe des Rungenschemels. Diese weitere Oberfläche ist bevorzugt eben bzw. glatt ausgebildet, sodass Schnittholz ohne Beschädigung gelagert und transportiert werden kann. Somit kann mit einer erfindungsgemäßen Vorrichtung sowohl Rundholz als auch Schnittholz fixiert werden. Entscheidend dabei ist, dass je nach Anwendungsfall einmal das Element mit dem kopfseitigen Profil und ein anderes Mal die weitere Oberfläche eine Auflagefläche für das Transportgut wie Rundholz oder Schnittholz bilden.

In einer besonders einfachen Ausführungsvariante kann eine an sich bekannte Rungenvorrichtung mit einem Rungenschemel und zwei seitlich angelenkten, zum Rungenschemel hin klappbaren Rungen sowie einem davon gesondert vorliegenden Element mit dem kopfseitigen Profil vorgesehen sein. Das Element mit dem kopfseitigen Profil kann neben der Rungenvorrichtung auf einer Ladefläche befestigt sein und überragt dabei den Rungenschemel in der Höhe, wenn Rundholz zu transportieren ist. Ist hingegen Schnittholz zu transportieren, kann das Element mit dem kopfseitigen Profil beispielsweise zur Seite geklappt und damit umgelegt werden, sodass das zu transportierende Schnittholz am Rungenschemel zur Anlage kommt, wobei das Element bzw. dessen Profil die oberste Oberfläche bildet. Dies ist ein wesentlicher Vorteil gegenüber bekannten Rungenvorrichtungen mit nicht klappbaren Rungen, weil problemlos zwei Schnittholzpakte mit einer Breite von jeweils 1200 mm nebeneinander gelagert werden können. Bislang musste eine Runge abmontiert werden, weil eine lichte innere Breite zwischen den Rungen nur 2310 mm bis 2350 mm beträgt. Nunmehr können Schnittholz oder andere Güter mit Losgrößen von bis zu 2550 mm Breite befestigt werden.

Möglich ist es hierfür auch, dass das Element mit dem kopfseitigen Profil z. B. auf halber Distanz zwischen zwei Rungenvorrichtungen in entsprechende seitliche Halterungen eingeschoben bzw. eingesteckt wird, wenn Rundholz zu transportieren ist, jedoch entnommen wird, wenn Schnittholz verfahren werden soll. Bevorzugt ist es gleichwohl, dass die Rungenvorrichtung so ausgebildet ist, dass das Profil einen Teil des Rungenschemels bildet. Dies ermöglicht es, die Rungenvorrichtung als einzelne Konstruktion auszubilden, sodass auf ein gesondertes Element, das verloren gehen könnte, verzichtet werden kann.

Die Rungen sind üblicherweise mit dem Rungenschemel verbunden. Dabei können die Rungen am Rungenschemel endseitig nach innen schwenkbar befestigt sein und in einer Endposition der Schwenkbewegung mit einer Rungenoberfläche über dem kopfseitigen Profil und vorzugsweise im Wesentlichen parallel zum Rungenschemel verlaufend liegen. Diese Ausführungsvariante ist besonders bevorzugt, weil bei einem Wechsel von Rundholz auf Schnittholz bloß eine Runge oder gegebenenfalls auch beide Rungen einzuklappen sind, um das kopfseitige Profil höhenmäßig zu überdecken. Eine äußere Oberfläche der Rungen bildet dann eine Auflagefläche für das zu transportierende Schnittholz. In der Praxis kann es dabei ausreichend sein, dass bloß eine Runge eingeklappt wird, um die erwähnte Auflagefläche zu bilden. Die zweite Runge kann wie beim Transport von Rundholz senkrecht angeordnet bleiben, um einen seitlichen Anschlag für das Schnittholz zu bilden, das im Übrigen mit geeigneten Befestigungsmitteln angezurrt wird, um während des Transportes eine stabile Fixierung zu erreichen. Wenn eine besonders schonende Auflage für das Schnittholz gewünscht ist, kann die Rungenoberfläche zumindest teilweise mit einem elastischen Material überzogen sein, wofür sich beispielsweise Kunststoffe wie Gummi eignen.

Einer einfachen Konstruktion wegen ist erfindungsgemäß vorgesehen sein, dass das Element mit dem kopfseitigen Profil entlang einer Längserstreckung des Rungenschemels verläuft und die Rungen an jeweils einer Seite des Elementes angeordnet sind. Das Element mit dem kopfseitigen Profil bildet dann eine zentrale Komponente des Rungenschemels. Die zwei Rungen sind seitlich gegenüberliegend angebracht, um Kräfte annähernd gleichmäßig aufnehmen zu können.

Das Element kann grundsätzlich aus beliebigen Komponenten gebildet sein, solange das kopfseitige Profil vorgesehen ist. Bevorzugt ist es jedoch, einer einfachen Fertigung wegen, wenn das Element aus einem oder mehreren plattenförmigen Teilen gebildet ist, wobei die Teile zweckmäßigerweise gleich sind, wenn mehrere eingesetzt werden. Ein Einsatz mehrerer plattenförmiger Teile ist von Vorteil, weil dann bei einer relativ geringen Stärke der einzelnen Teile durch beabstandete Anordnung mehrerer Teile nebeneinander die für einen sicheren Halt von Rundholz erforderliche Oberflächenstruktur bereitstellbar ist.

Weitere Merkmale, Vorteile und Wirkungen ergeben sich aus dem nachfolgend dargestellten Ausführungsbeispiel. In den Zeichnungen, auf welche dabei Bezug genommen wird, zeigen:
Fig. 1 eine erfindungsgemäße Rungenvorrichtung in Seitenansicht;
Fig. 2 eine Rungenvorrichtung gemäß Fig. 1 in Draufsicht;
Fig. 3 eine weitere Seitenansicht der Rungenvorrichtung gemäß Fig. 1;
Fig. 4 eine perspektivische Darstellung der Rungenvorrichtung gemäß Fig. 1.

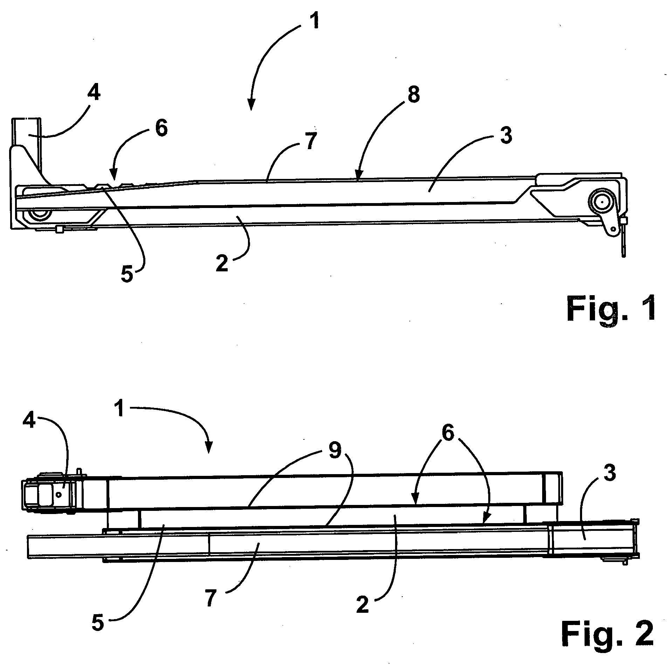

In Fig. 1 ist eine erfindungsgemäße Rungenvorrichtung 1 dargestellt. Die Rungenvorrichtung 1 umfasst einen Rungenschemel 2 sowie zwei Rungen 3, 4. Beide Rungen 3, 4 sind am Rungenschemel 2 angebracht, vorzugsweise, wie in Fig. 1 dargestellt, endseitig an gegenüberliegenden Enden des Rungenschemels 2. Hierfür sind beide Rungen 3, 4 am Rungenschemel 2 drehbar befestigt und dazu entsprechend gelagert. In Fig. 1 ist eine erste Runge 3 eingeklappt, sodass eine Oberfläche der Runge 3 parallel zu einer Grundfläche des Rungenschemels 2 verläuft. Die zweite Runge 4 hingegen, die in Fig. 1 bloß teilweise dargestellt ist, befindet sich in einem ausgeklappten Zustand und erstreckt sich ausgehend vom Rungenschemel 2 senkrecht zu diesem nach oben. Damit die Runge 4 nicht selbsttätig einklappt, ist diese mit einem Sicherungsmechanismus versehen. Hierfür eignen sich bekannte Mittel wie bei Sicherungsbolzen oder dergleichen. Bevorzugt ist ein Spannmechanismus vorgesehen, auf den noch eingegangen wird.

Wie aus Fig. 1 in Zusammenschau mit Fig. 2 ersichtlich ist, weist der Rungenschemel 2 ein zentrales Element 5 mit einem kopfseitigen Profil 6 auf. Im Ausführungsbeispiel ist das Element 5 mit dem kopfseitigen Profil 6 aus zwei Teilen 9 gebildet, die im Wesentlichen gleich sind. Wie ansatzweise in Fig. 1 ersichtlich ist, ist das kopfseitige Profil 6 mit vorspringenden und rückspringenden Bereichen bzw. einer Art Zähnen ausgebildet. Das in Fig. 1 ersichtliche Profil mit trapezförmigen Zähnen hat sich bewährt, es kann aber jede andere Art von Zähnen vorgesehen sein. Grundsätzlich ist es ausreichend, dass das Profil 6 erhabene und relativ dazu vertiefte Bereiche aufweist, sodass für Rundholz eine Art Verkeilung bzw. Verzahnung mit dem Profil 6 gegeben ist.

Bei einem Transport von Schnittholz wird entsprechend Fig. 1 zumindest die Runge 3 eingeklappt, sodass deren äußere Rungenoberfläche eine weitere Oberfläche 7 bildet, die gleichzeitig eine oberste Oberfläche 8 in Höhe des Rungenschemels 2 definiert oder zumindest mitdefiniert. Das Profil 6 liegt in diesem Fall höhenmäßig unterhalb der Rungenoberfläche, die auch mit einem elastischen oder weichen Material zumindest teilweise bedeckt sein kann. Schnittholz kann auf der ebenen Rungenoberfläche der Runge 3 ohne Beschädigung beim Transport abgelegt werden. Die zweite Runge 4 kann in der gegebenen senkrechten Position bleiben, um einen Anschlag zu bilden. Selbstverständlich ist es aber auch möglich, dass die zweite Runge 4 wie die Runge 3 eingeklappt wird.

Wird hingegen mit einer Rungenvorrichtung gemäß Fig. 1 und 2 Rundholz transportiert, werden beide Rungen 3, 4 ausgeklappt. Das Element 5 mit den zwei Teilen 9, die jeweils ein kopfseitiges Profil 6 aufweisen, liegt dann frei. In diesem Arbeitszustand der Rungenvorrichtung 1 kann Rundholz sicher transportiert werden. Das Rundholz wird unmittelbar auf den kopfseitigen Profilen 6 abgelegt, wobei eine Vielzahl von Holzstämmen zwischen den Rungen 3, 4 gehalten ist. Durch die sägezahnartige Struktur der Profile 6 wird das Rundholz im Bereich des Rungenschemels 2 während des Transportes rutschfest gehalten. Auf eine geringfügige oberflächliche Beschädigung des Rundholzes kommt es dabei nicht an, da dieses ohnedies weiterverarbeitet wird und der Außenbereich des Rundholzes zum Abfall wird.

Somit ist ein erster Arbeitszustand gegeben, wenn zumindest eine der Rungen 3, 4 eingeklappt ist. In diesem Arbeitszustand definiert eine weitere Oberfläche 7 eine oberste Oberfläche 8, auf welcher Schnittholz gelagert wird, üblicherweise die erwähnte äußere Rungenoberfläche. In einem zweiten Arbeitszustand sind beide Rungen 3, 4 ausgeklappt und wird eine oberste Oberfläche 8 durch das kopfseitige Profil 6 bestimmt.

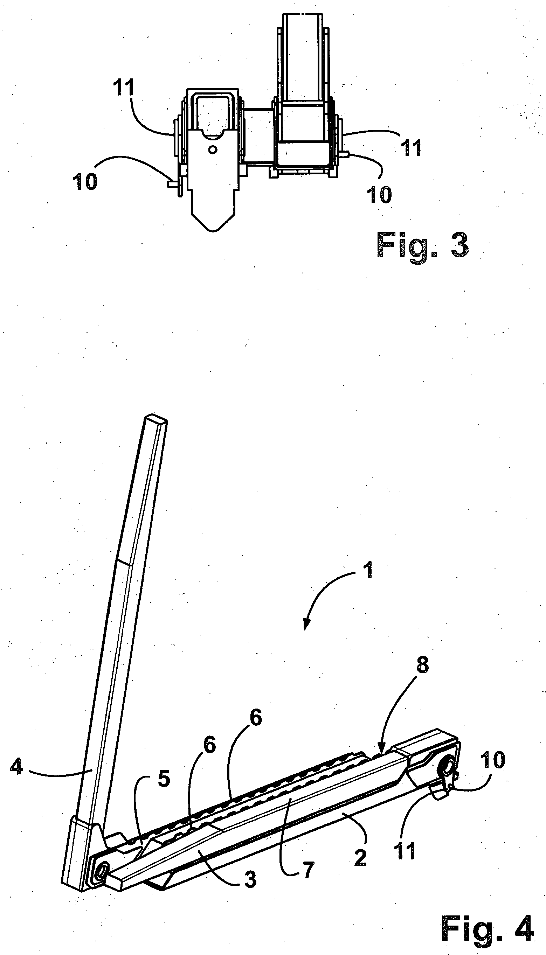

In Fig. 3 ist eine weitere Seitenansicht der Rungenvorrichtung 1 gemäß Fig. 1 gezeigt. Gut ersichtlich sind die seitlichen Zapfen 10, die jeweils mit Hebeln 11 mit einer der Rungen 3, 4 drehbar verbunden sind. Wird eine der Rungen 3, 4 aufgerichtet, so dient der Zapfen 10 zum Spannen. Hierfür kann ein üblicher, in Fig. 3 nicht gezeigter Spannhebel vorgesehen sein, durch welchen der Zapfen 10 und damit der Hebel 11 und die damit verbundene Runge 3 in der aufrechten Position zum Zentrum des Rungenschemels 2 hin gespannt wird.

In Fig. 4 ist schließlich eine Rungenvorrichtung 1 in perspektivischer Darstellung gezeigt, wobei die plattenförmigen Teile 9 mit den kopfseitigen Profilen 6 besonders gut ersichtlich sind. Ersichtlich ist auch, dass die Rungenvorrichtung 1 als integrale Konstruktion ausgebildet ist. In der Regel ist die gesamte Konstruktion aus einem Metall, insbesondere einem Stahl gefertigt, wobei die einzelnen Komponenten verschweißt sind. Die Rungen 3, 4 sind in geeigneten Aufnahmen 12 drehbar aufgenommen, wobei die Hebel 11 mit den Zapfen 10 auf jenen Achsen drehfest gelagert sind, auf welchen auch die Rungen 3, 4 gelagert sind. Dadurch drehen sich die Hebel 11 mit den Rungen 3, 4 mit und können anschließend mit dem erwähnten Spannmittel durch Eingriff über den Zapfen 10 in einer senkrechten Position fixiert werden.

Wenngleich im vorstehenden Ausführungsbeispiel das Element 5 ein zentraler Bestandteil der Rungenvorrichtung 1 ist und sich entlang deren Länge erstreckt, kann auch vorgesehen sein, dass das Element 5 gesondert von der übrigen Rungenvorrichtung 1 vorliegt. In diesem Fall kann eine Oberfläche des Rungenschemels 2 bereits glatt ausgebildet sein. Das Element 5 wird dann zwischen verschiedenen Rungenvorrichtungen 1 je nach Bedarf angeordnet.

Möglich ist es auch, dass das Element 5 in Fig. 1 und 2 um die Längsachse des Rungenschemels 2 drehbar ist. Dabei kann insbesondere vorgesehen sein, dass das Element 5 bodenseitig eben ausgebildet ist, beispielsweise in dem die zwei Teile 9 durch ein ebenes Bodenstück miteinander verbunden sind. Es ist dann auf einfache Weise möglich, eine glatte Oberfläche für Schnittholz bereitzustellen, indem das Element 5 einfach um 180° gedreht wird. Grundsätzlich ist auch eine Drehung um 90° bereits ausreichend, wenn die Teile 9 plattenförmig ausgebildet sind. Zweckmäßigerweise lässt sich dabei das Element 5 in den verschiedenen Positionen fixieren, sodass je nach Bedarf eine profilierte oder glatte Oberfläche bereitstellbar ist.

## Patentansprüche

1. Rungenvorrichtung (1) für ein Transportfahrzeug, insbesondere zum Transportieren von Rundholz sowie Schnittholz, umfassend einen Rungenschemel (2) und Rungen (3, 4), die mit dem Rungenschemel (2) verbunden sind, wobei die Rungenvorrichtung (1) mehrere Arbeitszustände aufweist, wobei ein Element (5) mit einem kopfseitigen Profil (6) mit vorspringenden und rückspringenden Bereichen vorgesehen ist, wobei das Profil (6) in einem ersten Arbeitszustand und eine weitere Oberfläche (7) in einem zweiten Arbeitszustand eine oberste Oberfläche (8) in Höhe des Rungenschemels (2) zumindest mitdefiniert, **dadurch gekennzeichnet, dass** das Element (5) mit dem kopfseitigen Profil (6) entlang einer Längserstreckung des Rungenschemels (2) verläuft und die Rungen (3, 4) an jeweils einer Seite des Elementes (5) angeordnet sind.

2. Rungenvorrichtung (1) nach Anspruch 1, **dadurch gekennzeichnet, dass** das Profil (6) einen Teil des Rungenschemels (2) bildet.

3. Rungenvorrichtung (1) nach Anspruch 1 oder 2, **dadurch gekennzeichnet, dass** die Rungen (3, 4) mit dem Rungenschemel (2) verbunden sind.

4. Rungenvorrichtung (1) nach Anspruch 3, **dadurch gekennzeichnet, dass** die Rungen (3, 4) am Rungenschemel (2) endseitig nach innen schwenkbar befestigt sind und in einer Endposition der Schwenkbewegung mit einer Rungenoberfläche über dem kopfseitigen Profil (6) und vorzugsweise im Wesentlichen parallel zum Rungenschemel (2) verlaufend liegen.

5. Rungenvorrichtung (1) nach Anspruch 4, **dadurch gekennzeichnet, dass** die Rungenoberfläche zumindest teilweise mit einem elastischen Material überzogen ist.

6. Rungenvorrichtung (1) nach einem der Ansprüche 1 bis 5, **dadurch gekennzeichnet, dass** das Element (5) aus einem oder mehreren plattenförmigen Teilen (9) gebildet ist.

## Claims

1. A stanchion device (1) for a transport vehicle, in particular for purposes of transporting logs and also sawn timber, comprising a stanchion sub-frame (2) and stanchions (3, 4), which are connected with the stanchion sub-frame (2), wherein the stanchion device (1) has a plurality of working states, wherein an element (5) is provided with a head-side profile (6) with protruding and receding regions, wherein the profile (6) in a first working state, and a further surface (7) in a second working state, together define one uppermost surface (8) at at least the height of the stanchion sub-frame (2), **characterised in that**, the element (5) with the head-side profile (6) runs along a longitudinal extent of the stanchion sub-frame (2) and the stanchions (3, 4) are arranged along each side of the element (5).

2. The stanchion device (1) in accordance with claim 1, **characterised in that**, the profile (6) forms a part of the stanchion sub-frame (2).

3. The stanchion device (1) in accordance with claim 1 or 2, **characterised in that**, the stanchions (3, 4) are connected with the stanchion sub-frame (2).

4. The stanchion device (1) in accordance with claim 3, **characterised in that**, the stanchions (3, 4) are attached to the end faces of the stanchion sub-frame (2) such that they can pivot inwards, and in an end position of the pivoting movement are located with a stanchion surface above the head-side profile (6) and preferably essentially parallel to the stanchion sub-frame (2).

5. The stanchion device (1) in accordance with claim 4, **characterised in that**, the stanchion surface is at least partially covered with an elastic material.

6. The stanchion device (1) in accordance with one of the claims 1 to 5, **characterised in that**, the element (5) is formed from one or a plurality of plate-shaped parts (9).

## Revendications

1. Dispositif de rancher (1) pour véhicule de transport, en particulier pour le transport de grumes et de bois débité, comprenant un berceau de rancher (2) et des ranchers (3, 4) qui sont raccordés au berceau de rancher (2), le dispositif de rancher (1) présentant plusieurs états de fonctionnement, un élément (5) comportant un profilé sommital (6) avec des parties saillant vers l'avant et saillant vers l'arrière étant prévu, le profilé (6) définissant du moins conjointement dans un premier état de fonctionnement une surface la plus élevée (8) et une autre surface (7) dans un second état de fonctionnement à hauteur du berceau de rancher (2), **caractérisé en ce que** l'élément (5) comportant le profilé sommital (6) est orienté suivant l'extension longitudinale du berceau de rancher (2) et que les ranchers (3, 4) sont disposés respectivement sur une face de l'élément (5).

2. Dispositif de rancher (1) selon la revendication 1, **caractérisé en ce que** le profilé (6) constitue une partie du berceau de rancher (2).

3. Dispositif de rancher (1) selon la revendication 1 ou 2, **caractérisé en ce que** les ranchers (3, 4) sont raccordés au berceau de rancher (2).

4. Dispositif de rancher (1) selon la revendication 3, **caractérisé en ce que** les ranchers (3, 4) sont fixés au berceau de rancher (2) par une extrémité en pouvant pivoter vers l'intérieur et sont positionnés dans une position terminale du mouvement de pivotement avec une surface de rancher au-dessus du profilé sommital (6) et de préférence sensiblement parallèlement au berceau de ranger (2).

5. Dispositif de rancher (1) selon la revendication 4, **caractérisé en ce que** la surface des ranchers est du moins partiellement revêtue d'un matériau élastique.

6. Dispositif de rancher (1) selon une des revendications 1 à 5, **caractérisé en ce que** l'élément (5) est constitué d'une ou de plusieurs pièces en forme de plaques (9).
